# EUROPÄISCHE PATENTSCHRIFT

(11) **EP 2 494 277 B1**
(45) Veröffentlichungstag und Bekanntmachung des Hinweises auf die Patenterteilung: **07.06.2017**
(21) Anmeldenummer: 10767908.6
(22) Anmeldetag: 06.10.2010
(51) Int. Cl.: F24D 3/18, F24D 12/02, F24F 3/14, F25B 21/02

(54) **WÄRMEPUMPENAGGREGAT und Verfahren zum Heizen**
HEAT PUMP UNIT and process of heating
Groupe pompe à chaleur et procédé de chauffage

(30) Priorität: 30.10.2009 CH 16712009
(43) Veröffentlichungstag der Anmeldung: 05.09.2012
(73) Patentinhaber: MENTUS HOLDING AG, 6330 Cham (CH)
(72) Erfinder: PETERHANS, Adrian, CH-5443 Niederrohrdorf (CH); HÖHMANN, Lars, CH-8708 Männedorf (CH)
(74) Vertreter: Falk, Urs
(86) Internationale Anmeldenummer: PCT/CH2010/000244
(87) Internationale Veröffentlichungsnummer: WO 2011/050485

(56) Entgegenhaltungen:
- DE-A1- 4 101 644
- DE-A1-102004 045 360
- DE-A1-102007 049 621
- DE-B- 1 215 330
- DE-U1- 29 512 639
- US-A- 2 796 743
- US-A- 3 067 592

## Beschreibung

Die vorliegende Erfindung bezieht sich auf ein Wärmepumpenaggregat, eine Anordnung mit solchen Wärmepumpenaggregaten zur Klimatisierung von Räumen, sowie ein Verfahren zum Heizen von Raumluft.

Zum Heizen von Räumen kommen verschiedenste Wärmegeräte wie beispielsweise Ölheizungen, Gasheizungen, Holzheizungen, Pelletheizungen, Wärmepumpen oder elektrische Heizungen zum Einsatz. Aber auch Wärmegeräte, welche sowohl heizen wie auch kühlen können, beispielsweise kombinierte Klima- Heizgeräte oder reversible Wärmepumpen, bei denen der Kältekreislauf umgekehrt werden kann, sind bekannt.

Üblicherweise geben die genannten Wärmegeräte ihre Wärme über eine Bodenheizung, über Radiatoren oder einer Kombination von beidem an die Raumluft ab. Radiatoren kommen bis anhin üblicherweise zum Einsatz, wenn das Wärmegerät vergleichsweise hohe Vorlauftemperaturen im Bereich von ca. 50-90°C liefert. Solch hohe Vorlauftemperaturen werden überwiegend mittels Ölheizungen, Gasheizungen, Holzheizungen oder Pelletheizungen erzeugt. Bodenheizungen hingegen kommen überwiegend dann zum Einsatz, wenn das Wärmegerät vergleichsweise tiefe Vorlauftemperaturen im Bereich von ca. 30-50°C liefert. Als Beispiel hierzu können beispielsweise Wärmepumpen erwähnt werden. Sollen mit einer Wärmepumpe hingegen Vorlauftemperaturen von über 50°C erzeugt werden, so wird die Heizung ineffizient, da der Wirkungsgrad von konventionellen Wärmepumpen mit steigender Vorlauftemperatur bzw. Temperaturdifferenz zwischen dem Medium des Wärmereservoirs, beispielsweise Aussenluft, Erdreich, Grundwasser etc., und der zu erzeugenden Vorlauftemperatur abnimmt.

Während bei Heizsystemen mit Raditoren die Raumtemperatur schnell verändert werden kann, besteht ein Nachteil von Bodenheizungen darin, dass diese aufgrund der grossen zu erwärmenden Masse träge sind. Ein weiterer Nachteil von Bodenheizungen besteht darin, dass diese ungeeignet sind, wenn über die Heizrohre ein Raum gekühlt werden soll, da beim Kühlen über die in den Boden eingelassenen Heiz- bzw. Kühlrohre keine nennenswerte natürliche Konvektion in dem zu kühlenden Raum erzeugt werden kann, so dass ohne zwangsweise Luftumwälzung insbesondere nur der Boden kalt wird, zumal kalte Luft ja bekanntlich eine höhere Dichte aufweist als warme Luft. Zudem tritt bei zu tiefen Temperaturen Kondensation auf.

Anstelle der genannten Wärmegeräte können beispielsweise auch Klimasplitgeräte zum Einsatz kommen. Allerdings sind Klimasplitgeräte mit dem Nachteil behaftet, dass zwischen der Ausseneinheit -Kondensator-Kompressorteil- und der Inneneinheit -Verdampfer- ein Kühlmittel zirkuliert, welches allenfalls gesundheitsgefährdend sein kann. Ist die Inneneinheit weit entfernt von der Ausseneinheit angeordnet, so müssen die das Kühlmittel aufnehmenden Leitungen zumindest teilweise durch Wohn- oder Büroräume hindurchgeführt werden, was unerwünscht ist und mit einem Gesundheitsrisiko verbunden sein kann. Zudem sinkt der Wirkungsgrad mit zunehmender Länge der Kühlleitungen linear ab.

Die Aufgabe der Erfindung besteht nun darin, ein gemäss dem Oberbegriff des Patentanspruchs 1 ausgebildetes Wärmepumpenaggregat zu schaffen, welches einen guten Wirkungsgrad aufweisen soll.

Diese Aufgabe wird mit einem Wärmepumpenaggregat gelöst, welches mit den im Kennzeichen des Anspruchs 1 angeführten Merkmalen versehen ist.

Bevorzugte Ausführungsformen des Wärmepumpenaggregats sind in den abhängigen Ansprüchen 2 bis 4 angegeben.

Die Erfindung betrifft auch eine Anordnung mit solchen Wärmepumpenaggregaten nach Anspruch 5 und weiter ein Verfahren nach Anspruch 6 mit einer Ausführungsform nach Anspruch 7.

Ausführungsbeispiele der Erfindung werden im Folgenden anhand von Zeichnungen näher erläutert. Dabei zeigt:
- Fig. 1: eine schematische Darstellung einer Anordnung zur Klimatisierung von Raumluft;
- Fig. 2a: in schematischer Darstellung ein Ausführungsbeispiel eines im Heizmodus betrieben Wärmepumpenmoduls;
- Fig. 2b: in schematischer Darstellung das im Kühlmodus betriebene Wärmepumpenmodul;
- Fig. 3: eine schematische Darstellung eines Wärmepumpenaggregats, und
- Fig. 3a: einen Querschnitt durch das Wärmepumpenaggregat gemäss Fig. 3.

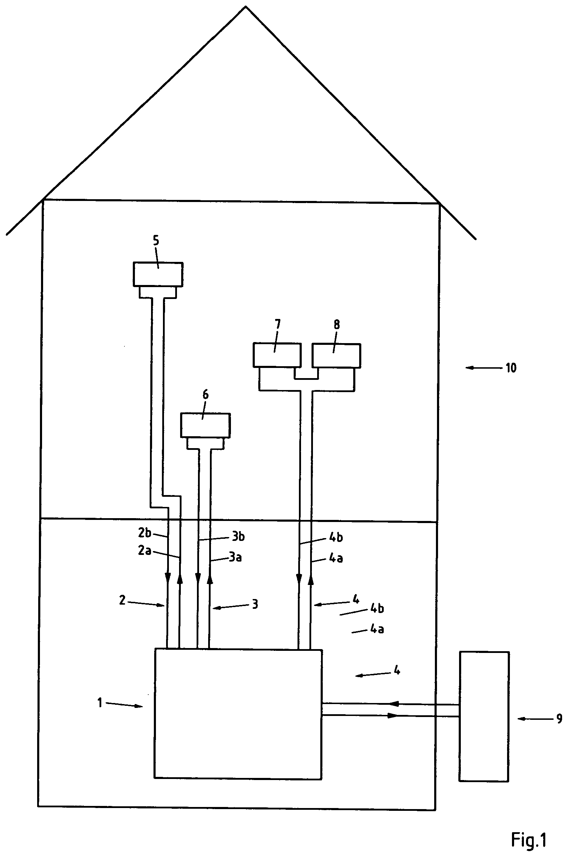

Die Figur 1 zeigt beispielhaft und in schematischer Darstellung eine Anordnung zur Klimatisierung von Raumluft. Die Anordnung umfasst ein zentrales Wärmegerät 1 sowie mehrere, innerhalb des zu klimatisierenden Gebäudes 10 anzuordnende, dezentrale Wärmepumpenaggregate 5-8. Im vorliegenden Beispiel ist das Wärmegerät 1 eine Wärmepumpe, welche sowohl im Heiz- wie auch im Kühlbetrieb arbeiten kann. Die Wärmepumpe kann beispielsweise über eine als Wärmetauscher wirkende Ausseneinheit 9 verfügen. Der Wärmetauscher kann ggf. auch im Innern des Gebäudes 10 angeordnet werden und über geeignete Mittel mit einem Wärmereservoir, beispielsweise der Aussenluft, verbunden sein.

Unter dem Begriff Wärmegerät sind im vorliegenden Fall sämtliche Arten von Heizungen wie beispielsweise Ölheizungen, Gasheizungen, Holzheizungen, Pelletheizungen, Wärmepumpen oder elektrische Heizungen zu verstehen. Aber auch umschaltbare Geräte, welche sowohl Kühlen wie auch Heizen können, werden im vorliegenden Fall als Wärmegeräte bezeichnet, wobei diese Aufzählung nicht als abschliessend anzusehen ist.

An der Wärmepumpe sind mehrere, separate Heizkreisläufe 2, 3, 4 mit jeweils einer Zuleitung 2a, 3a, 4a sowie einer Rückleitung 2b, 3b, 4b angeschlossen. In den Leitungen zirkuliert ein wärmeübertragendes Strömungsmittel, vorzugsweise Wasser. Auf die Darstellung der hierzu notwendigen Umwälzpumpen und anderer Elemente wie beispielsweise Ventile wird verzichtet, da diese Bestandteile dem Fachmann bekannt sind. Üblicherweise wird für jeden zu heizenden Raum ein separater Heizkreislauf vorgesehen. Alternativ sind auch konventionelle Leitungsführungen möglich, wie sie bei herkömmlichen Zentralheizungssystemen zum Einsatz kommen können. Diesbezüglich können beispielsweise einzelne, mehrere oder gemeinsame Steigleitungen mit Abzweigungen oder beliebige Kombinationen davon erwähnt werden. Im Einzelfall kann auch ein einziger Heizkreislauf vorgesehen werden.

Jedes der dezentralen Wärmepumpenaggregate 5-8 der Anordnung ist in einen Heizkreislauf 2, 3, 4 eingebunden, wobei pro Heizkreislauf ggf. auch mehr als ein dezentrales Wärmepumpenaggregat vorgesehen werden kann, wie dies bei den beiden seriell in den einen Heizkreislauf 4 eingebundenen Wärmepumpenaggregaten 7, 8 angedeutet ist.

Die grundlegende Idee dieser Anordnung besteht darin, dass mit dem zentralen Wärmegerät 1 das wärmeübertragende Strömungsmittel auf eine bestimmte Vorlauftemperatur angehoben oder ggf. abgesenkt wird, wobei die Wärmeenergie des Strömungsmittels von den dezentralen Wärmepumpenaggregaten 5-8 genutzt und unter zusätzlichem Einsatz von elektrischer Energie soweit angehoben bzw. abgesenkt wird, dass der jeweilige Raum auf eine vorbestimmte Temperatur aufgeheizt bzw. abgekühlt wird. Im Heizbetrieb erwärmt das Wärmegerät das wärmeübertragende Strömungsmittel auf eine Temperatur -Vorlauftemperatur- von beispielsweise 30-40°C, während im Kühlbetrieb das Strömungsmittel auf eine Vorlauftemperatur von beispielsweise 15-25°C gebracht wird. Das zentrale Wärmegerät verfügt dazu über die genannte Ausseneinheit 9, auf welche jedoch nicht näher eingegangen werden muss, da diese dem Fachmann wohlbekannt ist. Mit dem jeweiligen dezentralen Wärmepumpenaggregat 5-8 muss jedenfalls nur noch eine relativ geringe Temperaturdifferenz erzeugt werden, damit der jeweilige Raum auf die gewünschte Temperatur gebracht werden kann.

Eine solche Anordnung hat den Vorteil, dass einerseits die Effizienz der gesamten Anlage sehr gut ist, da sowohl das zentrale Wärmegerät 1 wie auch die dezentralen Wärmepumpenaggregate 5-8 in einem Betriebsfenster arbeiten können, in dem sie einen guten Wirkungsgrad besitzen. Zudem ermöglichen die dezentralen Wärmepumpenaggregate 5-8, dass die Temperatur und Feuchtigkeit in den einzelnen Räumen individuell eingestellt werden kann. Ein weiterer Vorteil dieser Anordnung besteht darin, dass keine grossflächigen Abstrahlkörper bzw. eine flächige Bodenheizung vorgesehen werden muss, damit der zu heizende Raum trotz einer vergleichsweise tiefen Vorlauftemperatur auf die gewünschte Temperatur gebracht werden kann, da das jeweilige dezentrale Wärmepumpenaggregat 5-8 die Vorlauftemperatur lokal nur um einen vergleichsweise geringen Betrag anheben muss. Somit eignet sich eine solche Anordnung insbesondere auch für den Ersatz von konventionellen Radiator- bzw. Konvektorheizungen.

Eine solche Anordnung dürfte deshalb insbesondere auch bei Gebäuderenovationen oder generell bei der Erneuerung konventioneller Heizanlagen zum Einsatz kommen und zwar insbesondere dann, wenn das jeweilige Gebäude nicht mit einer flächigen Boden-, Wand- oder Deckenheizung versehen ist. Als Beispiel hierzu sei der Ersatz einer Ölheizungsanlage erwähnt, bei welcher bis anhin ein Ölbrenner mit einer Vorlauftemperatur von beispielsweise 60-80°C zum Einsatz kam und die Heizenergie über im Haus verteilte Radiatoren an die einzelnen Räume abgegeben wurde. In diesem Fall kann der Ölkessel durch ein zentrales Wärmegerät, beispielsweise eine Wärmepumpe, ersetzt werden, während pro Raum zumindest ein Radiator durch ein Wärmepumpenaggregat ersetzt wird, wobei natürlich auch sämtliche Radiatoren durch dezentrale Wärmepumpenaggregate ersetzt werden können. Somit kann aufbauend auf der bestehenden Heizverteilungs-Infrastruktur eine zentrale Niedertemperaturheizung eingesetzt werden, ohne dass in den Räumen grossflächige Abstrahlkörper installiert bzw. in der Form von Boden- oder Deckenheizungsrohren verlegt werden müssen. Kommen als dezentrale Wärmepumpenaggregate thermoelektrisch arbeitende Geräte zum Einsatz, beispielsweise auf der Basis von Peltierelementen, so hat dies gegenüber Kompressor-Geräten den Vorteil, dass diese weitgehend lautlos arbeiten. Sofern ein zentrales Wärmegerät eingesetzt wird, welches sowohl heizen wie auch kühlen kann, beispielsweise eine umschaltbare Wärmepumpe, kann mit einer solchen Anordnung im Bedarfsfall natürlich auch gekühlt werden. Um einen effizienten Betrieb, insbesondere auch einen effizienten Kühlbetrieb zu gewährleisten, sind die dezentralen Wärmepumpenaggregate vorzugsweise mit einem Mittel zum Erzeugen einer zwangsweisen Luftströmung versehen. Neben der zwangsweisen Durchströmung des Gehäuses bewirken die genannten Mittel insbesondere auch eine zwangsweise Konvektion der Luft in dem jeweiligen Raum.

Durch den Einsatz der Anordnung kann somit eine konventionelle Heizung durch eine moderne Wärmepumpenheizung ersetzt werden, wobei die bestehende Heizverteilungs-Infrastruktur weiterhin genutzt werden kann, was u.a. den weiteren Vorteil hat, dass die Bewohner während des Umbaus der Heizungsanlage nicht ausziehen müssen, wie dies der Fall wäre, wenn eine flächige Boden-, Wand- oder Deckenheizung verlegt werden müsste.

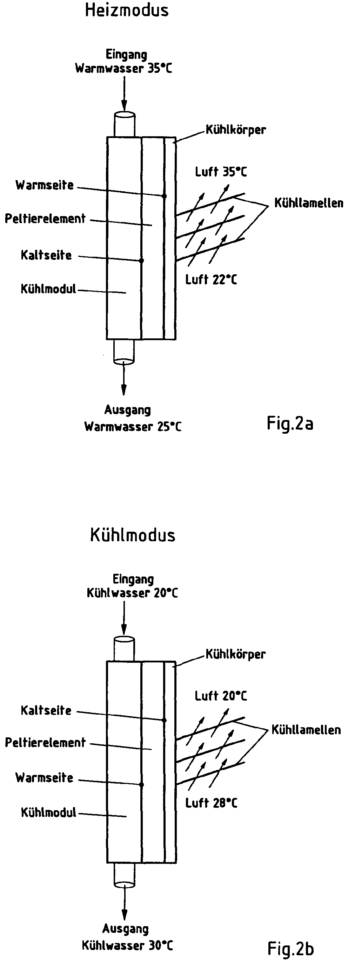

Die Fig. 2a zeigt in schematischer Darstellung ein Ausführungsbeispiel eines im Heizmodus betrieben Wärmepumpenmoduls, wie es vorzugsweise in den genannten dezentralen Wärmepumpenaggregaten zum Einsatz kommt. Das Wärmepumpenmodul besteht aus einem thermoelektrisch arbeitenden Peltierelement, das flächig mit einem Kühlmodul in Verbindung steht. Das Kühlmodul weist einen Einlass sowie einen Auslass für das wärmeübertragende Strömungsmittel -Wasser- auf. Auf der dem Kühlmodul gegenüberliegenden Seite des Peltierelements ist ein Kühlkörper angeordnet, der mit einer Vielzahl von Kühllamellen versehen ist. Im Heizmodus ist die Kaltseite des Peltierelements zum Kühlmodul gerichtet, während die Warmseite dem Kühlkörper zugewandt ist. Wird nun an das Peltierelement Spannung angelegt, so wird die Kaltseite abgekühlt während sich die Warmseite weiter aufwärmt. Dies bewirkt einerseits eine Abkühlung des Strömungsmittels, beispielsweise um 10°C zwischen dem Eingang und dem Ausgang. Andererseits wird der Kühlkörper und damit auch dessen Kühllamellen auf eine Temperatur oberhalb derjenigen des Strömungsmittels erwärmt. Wird nun Luft zwangsweise an den Kühllamellen vorbeigeführt, so erwärmt sich die Luft beispielsweise von 22°C auf 35°C. Die erwärmte Luft kann zum Heizen genutzt werden. Aufgrund der Tatsache, dass die Kaltseite des Peltierelements mittels des Warmwassers auf eine mittlere Temperatur von beispielsweise 30°C erwärmt wird, wird lediglich eine relativ geringe Temperaturdifferenz Δ T zwischen der Kalt- und der Warmseite des Peltierelements benötigt, damit die Luft auf eine für das Aufheizen des jeweiligen Raums benötigte Temperatur von beispielsweise 35°C erwärmt werden kann.

Fig. 2b zeigt in schematischer Darstellung das im Kühlmodus betriebene Wärmepumpenmodul eines dezentralen Wärmepumpenaggregats. Um die durchströmende Luft abkühlen zu können, wird das Peltierelement umgepolt, so dass seine Warmseite zum Kühlmodul gerichtet ist, während die Kaltseite dem Kühlkörper zugewandt ist.

Mit dem Anlegen der Betriebsspannung wird die Kaltseite des Peltierelements weiter abgekühlt, während sich die Warmseite weiter erwärmt. Im Kühlmodus wird die Warmseite des Peltierelements mittels des vorbeiströmenden Strömungsmittels gekühlt, während die Temperatur auf der Kaltseite durch die angelegte Spannung weiter sinkt. Durch Abgabe von thermischer Energie an das Strömungsmittels wird dieses beispielsweise um 10°C zwischen dem Eingang und dem Ausgang erwärmt. Um die Luft abzukühlen wird diese wiederum zwangsweise an den Kühllamellen vorbeigeführt, so dass sie sich beispielsweise von 28°C auf 20°C abkühlt. Indem die Warmseite des Peltierelements von dem vorbeiströmenden Strömungsmittel kontinuierlich gekühlt wird, wird wiederum lediglich eine relativ geringe Temperaturdifferenz Δ T zwischen der Kalt- und der Warmseite des Peltierelements benötigt, damit die Luft auf eine für das Abkühlen des jeweiligen Raums benötigte Temperatur von beispielsweise 20°C abgekühlt werden kann.

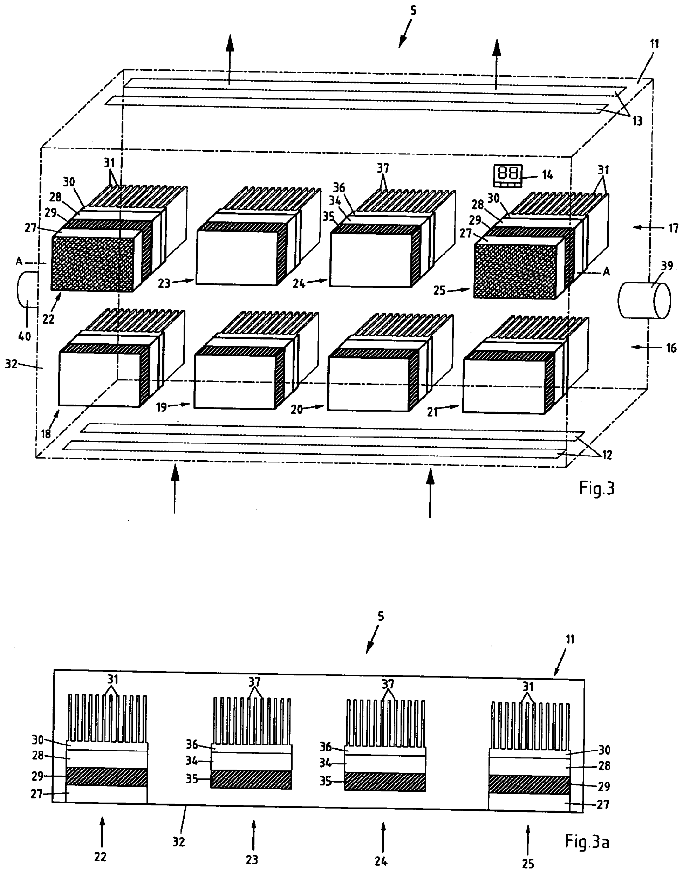

Die Fig. 3 zeigt in schematischer Darstellung ein bevorzugtes Ausführungsbeispiel eines dezentralen Wärmepumpenaggregats 5. Das Wärmepumpenaggregat 5 weist ein Gehäuse 11 auf, das auf der Unter- und Oberseite mit andeutungsweise ersichtlichen Lüftungsschlitzen 12, 13 versehen ist. Das Wärmepumpenaggregat 5 verfügt zudem über Mittel zum Erzeugen einer zwangsweisen Luftströmung, wobei die Luft das Gehäuse vorzugsweise von unten nach oben durchströmt, indem die Luft über die im Boden angeordneten Lüftungsschlitze 12 angesaugt und über die im Deckel angeordneten Lüftungsschlitze 13 ausgeblasen wird. Als Mittel zum Erzeugen einer zwangsweisen Luftströmung kann beispielsweise ein Ventilator oder ein Gebläse erwähnt werden, wobei diese Mittel nicht näher dargestellt sind. Zudem ist am Gehäuse ein Bedienpanel 14 angeordnet, mittels welchem die Temperatur oder eine gewünschte Funktion wie beispielsweise Entfeuchten eingestellt werden können. Das Bedienpanel 14 ist vorzugsweise mit einem Mikroprozessor verbunden, der die einzelnen Wärmepumpenelemente -Peltierelemente- den Anforderungen entsprechend über eine Leistungselektronik ansteuert. Ggf. kann natürlich auch eine zentrale Steuereinheit vorgesehen werden, mittels welcher sämtliche Wärmepumpenaggregate von einer zentralen Stelle aus bedient werden können. Die Übertragung von der zentralen Steuereinheit zu den lokalen Wärmepumpenaggregaten kann beispielsweise mittels Funk erfolgen. Zusätzliche weitere Elemente wie beispielsweise ein Temperaturfühler, ein Feuchtesensor, eine Empfängereinheit etc. können vorgesehen werden, sind jedoch nicht dargestellt. Auch weitere Elemente wie beispielsweise Luftführungskanäle, Befestigungselemente für die Peltiermodule etc. sind nicht dargestellt.

Im Innern des Gehäuses 11 sind auch die eigentlichen Wärmepumpenmodule angeordnet. Im vorliegenden Beispiel bestehen diese aus zwei vertikal übereinander angeordneten Reihen 16, 17 mit je vier Peltiermodulen 18-25. In der oberen Reihe 17 sind die beiden äusseren Peltiermodule 22, 25 in Sandwichbauweise ausgeführt, indem jeweils zwischen zwei Peltierelementen 27, 28 ein Kühlmodul 29 angeordnet ist, wobei jeweils das vordere Peltierelement 27 in Kontakt mit einer Frontplatte 32 des Gehäuses 11 steht. Die übrigen sechs Peltiermodule umfassen jeweils ein Peltierelement 34 mit einem daran angeordneten Kühlmodul 35, wobei die genanten Elemente stellvertretend für alle sechs Peltierelemente an einem Peltierelement 24 der oberen Reihe benannt sind. Sämtliche acht Peltiermodule 18-25 verfügen zudem über einen Kühlkörper 30, 36, dessen Kühllamellen 31, 37 derart im Innern des Gehäuses 11 angeordnet sind, dass sie von dem zwangsweise erzeugten Luftstrom umströmt werden und als Wärmetauscher wirken. Das Wärmepumpenaggregat 5 ist mit einem elektrischen Anschluss (nicht eingezeichnet) versehen, über welchen die elektrischen internen Verbraucher mit Energie versorgt werden können. Diesbezüglich können die Peltiermodule, das Gebläse sowie weitere Elemente wie beispielsweise eine Mikroprozessorsteuerung mitsamt der zugehörigen Leistungselektronik zur Ansteuerung der Peltierelemente erwähnt werden. Um das Wärmepumpenaggregat 5 wärmeenergetisch in den Heizkreislauf einbinden zu können, ist dieses mit einem Einlass 39 sowie einem Auslass 40 für das wärmeübertragende Strömungsmittel versehen. Im Betrieb werden die Kühlmodule 29, 35 der Peltiermodule von dem vom Einlass zum Auslass strömenden Strömungsmittel durchströmt. Die einzelnen Kühlmodule können strömungstechnisch seriell, parallel oder auch in einer Kombination davon angeordnet sein. Der Aufbau und die Wirkungsweise der Peltiermodule wurde vorgängig bereits anhand der Figuren 2a und 2b erläutert.

Wenn im vorliegenden Zusammenhang jeweils von Peltierelement gesprochen wird, so kann darunter sowohl ein einzelnes Peltierelement wie auch eine Anordnung von mehreren Peltierelementen zu einem Gesamtmodul verstanden werden, wobei auch letzteres der Einfachheit halber jeweils als Peltierelement bezeichnet wird. In einem Raum mit einem Volumen von ca. 60m³ werden beispielsweise Peltiermodule mit einer elektrischen Anschlussleistung von ca. 900 Watt eingesetzt.

Die Fig. 3b zeigt einen Querschnitt durch das Wärmepumpenaggregat gemäss Fig. 3 entlang der Linie A-A. In dieser Darstellung ist insbesondere erkennbar, dass die beiden äusseren Peltiermodule 22, 25 in Sandwichbauweise ausgeführt sind, indem jeweils zwischen zwei Peltierelementen 27, 28 ein Kühlmodul 29 angeordnet ist, während die beiden inneren Peltiermodule 23, 24 jeweils ein Peltierelement 34 und ein flächig daran angeordnetes Kühlmodul 35 umfassen. Die Kühlmodule 29, 35 sind zur besseren Unterscheidung schraffiert dargestellt. Von den beiden äusseren Peltiermodulen 22, 25 steht jeweils das vordere Peltierelement 27 in Kontakt mit der als Abstrahlplatte wirkenden Frontplatte 32 des Gehäuses 11. Dadurch wird bewirkt, dass im Heizmodus zumindest ein Teil der Wärme in Form von Strahlung direkt in den Raum emittiert wird. Um einen guten Wärmeübergang von dem jeweiligen Peltierelement 27 auf die Frontplatte 32 (Gehäuseabdeckung) zu gewährleisten, kann beispielsweise eine Wärmeleitpaste verwendet werden.

Um eine möglichst universelle Einsetzbarkeit des dezentralen Wärmepumpenaggregats zu ermöglichen, können vorzugsweise sämtliche Peltiermodule individuell über die Steuerung umgepolt werden, so dass sie sowohl im Heiz- wie auch im Kühlbetrieb arbeiten können. Vorzugsweise ist auch die Leistung zumindest einzelner Peltiermodule individuell elektrisch einstellbar, wobei dies vorzugsweise vollautomatisch über die Mikroprozessorsteuerung erfolgt.

Die Wirkungsweise des dezentralen Wärmepumpenaggregats wird nachfolgend anhand von einigen Beispielen unter Bezugnahme auf die Figuren 2 und 2a näher erläutert.

### 1. Heizen

Im reinen Heizbetrieb werden die Peltiermodule 18-25 derart angesteuert, dass die Kaltseite des jeweiligen Peltierelements 27, 28, 34 zu dem jeweiligen Kühlmodul 29, 35 gerichtet ist. Da das im jeweiligen Kühlmodul 29, 35 zirkulierende Strömungsmittel von dem zentralen Wärmegerät -Wärmepumpe- auf Vorlauftemperatur von beispielsweise 35°C erwärmt wird, müssen die einzelnen Peltierelemente bei normaler Heizleistung lediglich eine relativ geringe Temperaturdifferenz aufbauen. Mittels des Gebläses wird die zu erwärmende Luft über die im Boden angeordneten Lüftungsschlitze 12 eingesaugt und an der Warmseite des jeweiligen Peltierelements 28, 34 bzw. Kühlkörpers 30, 36 vorbeigeführt, wo sie sich an den Kühllamellen 31, 37 erwärmt. Die erwärmte Luft tritt danach über die im Deckel des Gehäuses 11 angeordneten Lüftungsschlitze 13 aus. Zusätzlich wird über die beiden äusseren Peltiermodule 22, 25 der oberen Reihe 17 Wärme direkt in den Raum abgestrahlt. Indem ein Teil der Heizenergie als Strahlung direkt in den Raum emittiert wird, kann im Heizbetrieb ein besonders angenehmes Raumklima geschaffen werden. Natürlich trägt auch die zwangsweise Konvektion der Raumluft zu einem angenehmen Raumklima bei und erhöht den Wirkungsgrad.

### 2. Kühlen

Im Kühlbetrieb wird das zirkulierende Strömungsmittel mittels des zentralen Wärmegeräts auf eine Vorlauftemperatur von beispielsweise 20°C gebracht bzw. abgekühlt. Die Peltiermodule 18-25 werden derart angesteuert, dass die Warmseite des jeweiligen Peltierelements 27, 28, 34 zu dem jeweiligen Kühlmodul 29, 35 gerichtet ist. Die Peltierelemente 27, 28, 34 müssen wiederum nur eine relativ geringe Temperaturdifferenz aufbauen, da ihre Kaltseite von dem Strömungsmittel kontinuierlich auf beispielsweise 22°C abgekühlt wird. Mittels des Gebläses wird die zu kühlende Luft über die im Boden angeordneten Lüftungsschlitze 12 eingesaugt und an der Kaltseite des Kühlkörpers 30, 36 des jeweiligen Peltierelements 28, 34 vorbeigeführt, wo sie sich an den Kühllamellen 31, 37 abkühlt. Die abgekühlte Luft tritt wiederum über die im Deckel angeordneten Lüftungsschlitze 13 aus. Natürlich wird im Kühlbetrieb über die beiden äusseren Peltiermodule 21, 25 der oberen Reihe 17 keine Wärme in den Raum abgestrahlt.

Die aus dem zum kühlenden Raum abzuführende Wärmeenergie wird mittels des Strömungsmittels aus dem jeweiligen Raum abgeführt. Im Kühlbetrieb ist eine effiziente Kühlung der Warmseite der Peltierelemente besonders wichtig, da nicht nur Wärmenergie aus dem zu kühlenden Raum abgeführt werden muss, sondern auch die vom Element selber aufgenommene elektrische Betriebsenergie, also die Summe der vom Peltierelement gepumpten Wärme plus der Wärme der Betriebsenergie.

Je nach Klimabedingungen wird die Luft im Kühlbetrieb automatisch entfeuchtet, da der relative Wassergehalt bzw. die relative Feuchte der Luft beim Abkühlen ansteigt. Sofern die an den Kühllamellen 31, 37 vorbeiströmende Luft unter den Taupunkt abgekühlt wird, bildet sich Kondenswasser. Um dieses Kondenswasser aufzufangen, ist das Wärmegerät vorzugsweise mit einer Auffangschale und einem Ablauf versehen, der das beim Abkühlen der Luft ggf. entstehende Kondenswasser ableitet. Das Kondenswasser kann beispielsweise in die gebäudeinteme Abwasserleitung eingeleitet werden.

### 3. Entfeuchten

In dieser Betriebsart werden zumindest einzelne Peltierelemente 27, 28, 34 derart angesteuert, dass sich die Kühllamellen des zugehörigen Kühlkörpers auf eine Temperatur unterhalb des Taupunkts der Luft abkühlen, so dass sich Kondenswasser bildet. Hierzu ist das Wärmepumpenaggregat vorzugsweise mit zumindest einem Taupunktsensor sowie einem Temperatursensor versehen, deren Daten zwecks Ansteuerung der Peltierelemente von der Mikroprozessorsteuerung erfasst und ausgewertet werden. In der Betriebsart Entfeuchten wird die Luft zumindest minimal abgekühlt, so dass sie am Auslass des Wärmepumpenaggregats eine zumindest geringfügig tiefere Temperatur aufweist als am Einlass.

Dieser Betriebsart muss insbesondere auch unter ökonomischen Aspekten Beachtung geschenkt werden, da es wirtschaftlicher sein kann, die Raumluft nicht abzukühlen sondern diese zu entfeuchten. Jedenfalls kann bei bestimmten Klimabedingungen ein Entfeuchten, beispielsweise um 20% relative Feuchte, subjektiv zu dem gleichen Ergebnis führen bzw. den gleichen Wahmehmungseffekt bewirken, wie das Abkühlen der Raumluft um einige Grad Celsius.

### 4. Heizen und Entfeuchten

Diese Funktion stellt ein Novum dar für ein Wärmepumpenaggregat der hier zur Rede stehenden Art. Für diese Betriebsart ist es notwendig, dass die Peltierelemente zumindest einzelner Peltiermodule individuell elektrisch angesteuert und umgepolt werden können. Konkret werden zumindest einzelne Peltierelemente der Peltiermodule 18-21 der unteren Reihe 16 derart angesteuert, dass sich die Kühllamellen des jeweilig zugehörigen Kühlkörpers auf eine Temperatur unterhalb des Taupunkts der eintretenden Luft abkühlen, so dass sich wiederum Kondenswasser bildet. Zumindest einzelne der weiteren Peltierelemente werden hingegen im "Heizmodus" betrieben, so dass sich die daran vorbeiströmende Luft erwärmt. Vorzugsweise werden die Peltierelemente der Peltiermodule 22-25 der oberen Reihe 17 im Heizmodus betrieben, so dass die durchströmende Luft zuerst entfeuchtet und danach erwärmt wird.

Diese vierte Betriebsart eignet sich insbesondere für Räume, die einerseits geheizt werden müssen und in denen andererseits viel Feuchtigkeit an die Luft abgegeben wird. Als Beispiel hierzu seien Fitnesscenter erwähnt, welche bekanntermassen auch im Winter unter einer hohen bzw. zu hohen Luftfeuchte leiden. Ein anderes weitverbreitetes Beispiel sind Räume zum Trocknen von Wäsche.

Zusammenfassend kann festgehalten werden, dass das erfindungsgemässe Wärmepumpenaggregat universelle Betriebsmöglichkeiten erlaubt. Zudem zeichnet sich die Anlage durch einen guten Gesamt-Wirkungsgrad -Coefficient of Performance (COP)- aus und ermöglicht auf einfache Weise, dass die Temperatur und ggf. die Luftfeuchtigkeit in den einzelnen Räumen individuell einstellbar ist. Ein ganz entscheidender Vorteil besteht darin, dass ein zentrales Wärmegerät eingesetzt werden kann, welches mit vergleichsweise tiefen Vorlauftemperaturen arbeitet, wobei die Vorlauftemperatur in den dezentral angeordneten Wärmepumpenaggregaten auf ein höheres Niveau angehoben werden kann, so dass sich ein angenehmes Raumklima erreichen lässt, ohne dass dazu eine grosse Wärmeübertragungsfläche beispielsweise in der Form von grossflächigen Abstrahlkörpern bzw. einer flächigen Boden-, Wand- oder Deckenheizung vorgesehen werden muss.

Durch eine erzwungene Konvektion der Raumluft sowie das zusätzliche Emittieren von Wärmestrahlung kann im Heizmodus ein besonders angenehmes Raumklima geschaffen werden.

Anstelle der beschriebenen Wärmepumpe als zentrales Wärmegerät können natürlich auch andere Formen von Wärmegeräten wie beispielsweise Ölheizungen, Gasheizungen, Holzheizungen etc. eingesetzt werden. Soll die jeweilige Anlage auch im Kühlmodus arbeiten können, so können die genannten Wärmegeräte ggf. mit einem Aussenwärmetauscher versehen werden. Zusätzlich ist auch der Anschluss externer Energiequellen möglich.

## Patentansprüche

1. Wärmepumpenaggregat (5), umfassend
ein Gehäuse (11), mit
ersten und zweiten Öffnungen (12; 13),
Wärmepumpenmodulen (18-25) mit Peltierelementen (27, 28, 34),
einem Gebläse zum zwangsweisen Ansaugen von Luft durch die ersten Öffnungen (12), Befördern der Luft an den Wärmepumpenmodulen (18-25) vorbei und Ausblasen der Luft durch die zweiten Öffnungen (13), und
einem Einlass (39) und einem Auslass (40) zum Einbinden der Wärmepumpenmodule (18-25) in einen Kreislauf, in dem ein wärmeübertragendes Strömungsmittel zirkuliert,
wobei die Wärmepumpenmodule (18-25) durch Zufuhr von elektrischer Energie in einem Heizmodus Wärmeenergie aus dem Strömungsmittel aufnehmen und an die vorbeiströmende Luft abgeben, und in einem Kühlmodus Wärmeenergie aus der vorbeiströmenden Luft entnehmen und an das Strömungsmittel abgeben,
**dadurch gekennzeichnet, dass**
das Gehäuse (11) eine als Abstrahlplatte wirkende Frontplatte (32) aufweist und dass wenigstens ein Peltierelement (27) von mindestens einem der Wärmepumpenmodule (18-25) derart mit der Frontplatte (32) verbunden ist, dass im Heizmodus zumindest ein Teil der von diesem Peltierelement (27) erzeugten Wärme als Wärmestrahlung direkt in einen zu temperierenden Raum emittierbar ist.

2. Wärmepumpenaggregat nach Anspruch 1, **dadurch gekennzeichnet, dass** zumindest einzelne der Wärmepumpenmodule (22-25) in einem Heizmodus und gleichzeitig zumindest einzelne weitere Wärmepumpenmodule (18-21) in einem Kühlmodus betreibbar sind, um Wasser aus der Luft auszukondensieren, die an den im Kühlmodus betriebenen Wärmepumpenmodulen (18-21) vorbeiströmt.

3. Wärmepumpenaggregat nach Anspruch 1, **dadurch gekennzeichnet, dass** einige Peltierelemente (28, 34) der Wärmepumpenmodule (18-25) in thermischem Kontakt mit einem mit Kühllamellen (31, 37) versehenen Kühlkörper (30, 36) stehen, an welchen die zu temperierende Luft vorbeigeführt wird, dass die Peltierelemente (27, 28, 34) der Wärmepumpenmodule (18-25) in zumindest einer unteren Reihe (16) und einer oberen Reihe angeordnet sind, dass einzelne der Peltierelemente (28, 34) der Wärmepumpenmodule (18-21) der unteren Reihe (16) derart steuerbar sind, dass sich die Kühllamellen (31, 37) des zugehörigen Kühlkörpers (30, 36) auf eine Temperatur unterhalb des Taupunkts der angesaugten Luft abkühlen, und dass gleichzeitig einzelne der Peltierelemente (28, 34) der Wärmepumpenmodule (22-25) der oberen Reihe (17) derart steuerbar sind, dass sich die an den Kühllamellen (31, 37) des zugehörigen Kühlkörpers (30, 36) vorbeiströmende Luft erwärmt.

4. Wärmepumpenaggregat nach einem der Ansprüche 1 bis 3, **dadurch gekennzeichnet, dass** zumindest einzelne der Peltierelemente (27, 28) in Sandwichbauweise ausgeführt sind, indem jeweils zwischen zwei Peltierelementen (27, 28) ein Kühlmodul (29) angeordnet ist, das von dem im Kreislauf zirkulierenden Strömungsmittel durchströmbar ist, wobei jeweils eines der beiden Peltierelemente (27) in Kontakt mit der Abstrahlplatte (32) des Gehäuses (11) steht.

5. Anordnung zur Klimatisierung von Räumen, mit zumindest einem zentralen Wärmegerät (1), an welchem ein wärmeübertragendes Strömungsmittel aufnehmende Leitungen (2a, 2b, 3a, 3b, 4a, 4b) angeschlossen sind, wobei die Anordnung zumindest ein dezentrales Wärmepumpenaggregat (5, 6, 7, 8) nach einem der Ansprüche 1 bis 4 umfasst, welches mit dem zentralen Wärmegerät (1) über die genannten Leitungen (2a, 2b, 3a, 3b, 4a, 4b) verbunden ist.

6. Verfahren zum Heizen von Raumluft, **gekennzeichnet durch**
Erhitzen eines flüssigen Mediums mittels eines zentralen Wärmegeräts (1) und Zirkulieren des flüssigen Mediums in einem Kreislauf mit einem oder mehreren dezentralen Wärmepumpenaggregat(en) (5-8), wobei das jeweilige dezentrale Wärmepumpenaggregat (5-8) Wärmepumpenmodule (18-25) mit Peltierelementen (27, 28, 34) aufweist,
mittels der Wärmepumpenmodule (18-25) Entnehmen von Wärme aus dem flüssigen Medium und Erzeugen von Wärme mit einer Temperatur, die höher ist als eine Temperatur des flüssigen Mediums,
Ansaugen von Luft, Befördern der Luft an den Wärmepumpenmodulen (18-25) vorbei und Ausblasen der Luft, wobei ein Teil der mittels der Wärmepumpenmodule (18-25) erzeugten Wärme an die an den Wärmepumpenmodulen (18-25) vorbeiströmende Luft abgegeben wird, und
mittels einer Abstrahlplatte (32), die mit wenigstens einem Peltierelement (27) von wenigstens einem der Wärmepumpenmodule (18-25) verbunden ist, Emittieren eines weiteren Teils der erzeugten Wärme in Form von Strahlung direkt in den Raum.

7. Verfahren nach Anspruch 6, **gekennzeichnet durch**
Abkühlen der durch die zwangsweise Konvektion geführten Luft unter den Taupunkt, um die Luft zu entfeuchten,
Erwärmen der abgekühlten Luft, und
erst dann Abgeben der erwärmten Luft an den Raum.

## Claims

1. Heat pump unit (5), comprising
a housing (11), having
first and second openings (12, 13),
heat pump modules (18-25) with Peltier elements (27, 28, 34),
a fan for the forced pulling of air through the first openings (12), conveying the air to the heat pump modules (18-25) and blowing the air through the second openings (13), and
an inlet (39) and an outlet (40) for integrating the heat pump modules (18-25) into a circuit, in which a heat exchanging fluid circulates,
wherein
by supplying electrical energy to the heat pump modules (18-25) the heat pump modules (18-25) in a heating mode withdraw heat energy from the fluid and deliver the withdrawn heat energy to the air passing by, and in a cooling mode withdraw heat energy from the air passing by and deliver the withdrawn heat energy to the fluid,
**characterized in that**
the housing (11) comprises a front plate (32) acting as radiation plate,
and that at least one Peltier element (27) of at least one of the heat pump modules (18-25) is connected with the front plate (32) in such a manner, that in the heating mode at least a part of the heat produced by the Peltier element (27) is emitted as thermal radiation directly into a room to be controlled in temperature.

2. Heat pump unit according to claim 1, **characterized in that** at least some of the heat pump modules (22-25) may be operated in a heating mode and simultaneously at least some further heat pump modules (18-21) may be operated in a cooling mode in order to condensate water out of the air which passes the heat pump modules (18-21) operated in the cooling mode.

3. Heat pump unit according to claim 1, **characterized in that** some Peltier (28, 34) elements of the heat pump modules (18-25) are in thermal contact with a cooling body (30, 36) provided with cooling fins (31, 37) at which the air pulled through the first openings (12) passes, that the Peltier elements (27, 28, 34) of the heat pump modules (18-25) are arranged at least in a bottom row (16) and an upper row (17), that some of the Peltier elements (28, 34) of the heat pump modules (18-21) of the bottom row (16) are controllable in such a manner, that the cooling fins (31, 37) of the associated cooling body (30, 36) cool down to a temperature below the dew point of the air pulled through the first openings (12), and that simultaneously some of the Peltier elements (28, 34) of the heat pump modules (22-25) of the upper row (17) are controllable in such a manner that the air passing the cooling fins (31, 37) of the associated cooling body (30, 36) is heated.

4. Heat pump unit according to any of claims 1 to 3, **characterized in that** at least some of the Peltier elements (27, 28) are implemented in sandwich construction **in that** in each case a cooling module (29) is arranged between two Peltier elements (27, 28), the fluid circulating in the circuit flowable through the cooling module, wherein in each case one of the two Peltier elements (27) is in contact with the radiation plate (32) of the housing (11).

5. Arrangement for air-conditioning rooms, having at least one central heating device (1), to which lines (2a, 2b, 3a, 3b, 4a, 4b) accommodating a heat exchanging fluid are connected, the arrangement comprising at least one decentralized heat pump unit (5, 6, 7, 8) according to any of claims 1 to 4, which heat pump unit (5, 6, 7, 8) is connected to the central heating device (1) by said lines (2a, 2b, 3a, 3b, 4a, 4b).

6. Method for heating room air, **characterized by**
heating a liquid medium by means of a central heating device (1) and circulating the liquid medium in a circuit having one or more decentralized heat pump units (5-8), the respective decentralized heat pump unit (5-8) having heat pump modules (18-25) with Peltier elements (27, 28, 34),
using the heat pump modules (18-25) to withdraw heat from the liquid medium and generate heat having a temperature that is higher than a temperature of the liquid medium,
pulling air, conveying the air to the heat pump modules (18-25) and blowing out the air, wherein a part of the air heated by the heat pump modules (18-25) is delivered to the air passing at the heat pump modules (18-25),
emitting a further part of the produced heat by means of a radiation plate (32) which is connected to at least one Peltier element (27) of at least one of the heat pump modules (18-25) as radiation directly into the room.

7. Method according to claim 6, **characterized by**
cooling the air flowing by forced convection below the dew point in order to dehumidify the air,
heating the cooled air, and
only then delivering the heated air to the room.

## Revendications

1. Unité de pompe à chaleur (5), comprenant
un caisson (11) avec
des premières et deuxièmes ouvertures (12 ; 13),
des modules de pompe à chaleur (18-25) avec des éléments Peltier (27, 28, 34),
une soufflerie pour l'aspiration forcée d'air à travers les premières ouvertures (12), le transport de l'air devant les modules de pompe à chaleur (18-25) et l'éjection de l'air à travers les deuxièmes ouvertures (13), et
une entrée (39) et une sortie (40) pour intégrer les modules de pompe à chaleur (18-25) dans un circuit dans lequel circule un fluide circulant transmettant la chaleur,
dans lequel les modules de pompe à chaleur (18-25) absorbent de l'énergie thermique du fluide circulant par l'apport d'énergie électrique dans un mode de chauffage et la transmettent à l'air passant au voisinage et, dans un mode de refroidissement, absorbent de l'énergie thermique de l'air passant au voisinage et la transmettent au fluide circulant, **caractérisé en ce que** le caisson (11) comporte un panneau avant (32) agissant comme un panneau rayonnant et **en ce qu'**au moins un élément Peltier (27) d'au moins un des modules de pompe à chaleur (18-25) est relié au panneau avant (32) de telle manière qu'en mode de chauffage une partie au moins de la chaleur produite par cet élément Peltier (27) puisse être émise directement sous forme de rayonnement thermique dans une pièce dont la température doit être ajustée.

2. Unité de pompe à chaleur selon la revendication 1, **caractérisé en ce qu'**au moins certains des modules de pompe à chaleur (22-25) peuvent fonctionner dans un mode de chauffage et au moins certains autres modules de pompe à chaleur (18-21) dans un mode de refroidissement en même temps afin de faire condenser de l'eau contenue dans l'air qui passe sur les modules de pompe à chaleur (18-21) fonctionnant en mode de refroidissement.

3. Unité de pompe à chaleur selon la revendication 1, **caractérisé en ce que** certains éléments Peltier (28, 34) des modules de pompe à chaleur (18-25) sont en contact thermique avec un élément de refroidissement (30, 36) muni d'ailettes de refroidissement (31, 37) sur lequel passe l'air dont la température doit être ajustée, **en ce que** les éléments Peltier (27, 28, 34) des modules de pompe à chaleur (18-25) sont disposés au moins en une rangée inférieure (16) et une rangée supérieure, **en ce que** certains des éléments Peltier (28, 34) des modules de pompe à chaleur (18-21) de la rangée inférieure (16) peuvent être commandés de telle manière que les ailettes de refroidissement (31, 37) de l'élément de refroidissement (30, 36) correspondant se refroidissent à une température plus basse que le point de rosée de l'air aspiré et qu'en même temps certains des éléments Peltier (28, 34) des modules de pompe à chaleur (22-25) de la rangée supérieure (17) peuvent être commandés de telle manière que l'air passant sur les ailettes de refroidissement (31, 37) de l'élément de refroidissement (30, 36) correspondant se réchauffe.

4. Unité de pompe à chaleur selon l'une des revendications 1 à 3, **caractérisé en ce qu'**au moins certains des éléments Peltier (27, 28) sont réalisés en construction sandwich en disposant entre deux éléments Peltier (27, 28) un module de refroidissement (29) qui peut être parcouru par le fluide circulant dans le circuit, l'un des deux éléments Peltier (27) étant en contact avec le panneau rayonnant (32) du caisson (11).

5. Dispositif pour la climatisation de locaux avec au moins un appareil de chauffage central (1) auquel sont raccordées des conduites (2a, 2b, 3a, 3b, 4a, 4b) contenant un fluide transmettant la chaleur, lequel dispositif comprend au moins une unité de pompe à chaleur décentralisé (5, 6, 7, 8) selon l'une des revendications 1 à 4 qui est relié à l'appareil de chauffage central (1) par lesdites conduites (2a, 2b, 3a, 3b, 4a, 4b).

6. Procédé pour chauffer l'air d'une pièce, **caractérisé en ce qu'**il comprend
le chauffage d'un fluide liquide au moyen d'un appareil de chauffage central (1) et la mise en circulation du fluide liquide dans un circuit avec une ou plusieurs unités de pompe à chaleur décentralisées (5-8), chaque unité de pompe à chaleur décentralisée (5-8) comprenant des modules de pompe à chaleur (18-25) avec des éléments Peltier (27, 28,34),
captage de chaleur au moyen des modules de pompe à chaleur (18-25) à partir du fluide liquide et production de chaleur à une température plus élevée qu'une température du fluide liquide,
aspiration d'air, acheminement de l'air sur les modules de pompe à chaleur (18-25) et éjection de l'air, une partie de la chaleur produite au moyen des modules de pompes à chaleur (18-25) étant transmise à l'air qui passe sur les modules de pompes à chaleur (18-25), et
au moyen d'un panneau rayonnant (32) relié à au moins un élément Peltier (27) d'au moins un des modules de pompes à chaleur (18-25), émission d'une autre partie de la chaleur produite directement dans la pièce sous forme de rayonnement.

7. Procédé selon la revendication 6, **caractérisé en ce que** l'air acheminé par convection forcée est refroidi en dessous du point de rosée afin d'éliminer l'humidité de l'air,
l'air refroidi est chauffé et
l'air chauffé n'est envoyé qu'ensuite dans la pièce.
